Europäisches Patentamt

European Patent Office

Office européen des brevets

(11) Publication number: **0 397 625**
**A2**

## (12) EUROPEAN PATENT APPLICATION

(21) Application number: **90830209.4**

(22) Date of filing: **11.05.90**

(51) Int. Cl.⁵: **B29C 47/66**

(30) Priority: **12.05.89 IT 2048089**

(43) Date of publication of application:
**14.11.90 Bulletin 90/46**

(84) Designated Contracting States:
**AT BE CH DE ES FR GB LI NL SE**

(71) Applicant: **C.F. UTENSILI DI PAGLIUGHI,
PIERLUIGI & C. S.a.s.**
**Via De Gasperi**
**Castano Primo (Milano)(IT)**

(72) Inventor: **Pagliughi, Pierluigi**
**Via Card. Ferrari, 2**
**Castano Primo (Milano)(IT)**

(74) Representative: **Aimi, Luciano et al**
**c/o Società Italiana Brevetti S.p.A. Via
Carducci 8**
**I-20123 Milano(IT)**

(54) **A wear preventing cylinder for injection molding or extrusion machines.**

(57) A wear preventing cylinder for plastic material injection molding or extrusion machines comprises a steel support jacket wherein there is received a highly wear resistant sintered material core. The inner surface of the support jacket and the outer surface of the wear resistant core have a slightly conical outline in the forwarding direction of the material being processed.

EP 0 397 625 A2

# A WEAR PREVENTING CYLINDER FOR INJECTION MOLDING OR EXTRUSION MACHINES

This invention concerns a wear preventing cylinder adapted in particular to receive the mixing and forwarding screw in injection molding or extrusion machines for plastic materials.

As it is known, the inside surface of the plastification cylinders or chambers for plastic materials processing, in particular if the latter are loaded with abrasive materials, like for instance glass fibers or the like, is subjected to a particularly severe wear, under the pushing and pressure action to which the forwarding screw subjects the plastic material.

While striving to obviate to this problem, which affects even the hardest steels, the inside surface of the plastification cylinders has been lined with special wear resisting metals, like Xaloy. However, thermal excursions to which the cylinder is subjected through the various processing steps tend to damage the structural integrity causing the internal wear resisting liner to come apart, in some areas, from the steel cylinder body. The drawbacks mentioned herein are particularly apparent in those machines where the pasty materials are pressed at temperatures of approximately 250-300°C and higher, under pressures that, in some areas reach up to 400 atmospheres due to the push of the feed screw enclosed in the metal cylinder. Owing to the severe wear caused both by the pressure and by the abrasive materials (like for instance glass fibers) contained in the pasty material proceeding forward through the cylinder, the surface of said cylinder will wear out at an extremely high rate.

The object of this invention is to overcome the difficulties arising with the presently available plastification chambers and according to this invention said chambers are provided as tubular cylinders comprising a steel support jacket and an internal core of a particularly wear resistant material, like for instance sintered silica powder. Since the two materials comprising the jacket and the core have different thermal expansion coefficients, if they were assembled at room temperature, an exceedingly large gap would arise at the operating temperatures, since the metal jacket expands more than the sintered powder core. Therefore, besides unacceptable relative displacements between the jacket and the core, the swear resisting material, which is intrinsically brittle and is not designed to bear the stress, would be subjected to an excessively high pressure and would break. On the other hand, the intrinsic brittleness and the high costs of the wear resistant material would not allow the complete cylinder to be manufatcured in this material, while the same expansion problems would still be incurred at the connecting flanges.

According to this invention, the support jacket and the wear resistant core are shrink-fitted, at a temperature slightly higher than the operating temperature. That is done in such a way as to ensure always a perfect adhesion of the parts of the assembly in order that the outer jacket bears the stress and the internal core resists wear.

The hollow internal core is sized in such a way as to be able to bear the centripetal compression stress of the steel jacket. In order to prevent possible sliding displacements between the core and the jacket under the forwarding pressure provided by the screw, the core outer surface and the jacket inner surface are given a frustoconical shape, tapering in the forwarding direction of the plastic material being processed. On the other hand, this makes the assembly operation easier, in that the insertion of the inner wear resisting core inside the outer jacket is made easier. In this way there is no more need to comply with very strict toleranc es required if the contact surfaces were perfectly cylindrical, while the frustoconical shape of the contacting surfaces prevents the core from rotating inside the jacket (the rotation being otherwise caused by rotation of the pressure screw) in that the contact between conical surfaces causes a friction locking effect similar to that of Morse cones. The complementary conical shape of the two contacting surfaces provides also, in the case the operating temperature were exceeded, for a compensation of any clearance thanks to the axial displacement under the pressure of the screw acting on the core, and to the larger expansion of the outer jacket. Therefore, this slight forward motion of the wear resistant core ensures a continuous contact between the two confronting surfaces.

In order to ensure that the latter possibility of operation at a temperature higher than the normal operating temperature does not allow the wear resistant core to project out of the downstream end of the support jacket, jeopardizing the integrity of the sintered material, the dimensions and the thermal expansion and mechanical strength properties of the two complementary members should be designed in such a way that the forwarding pressure to which the inner core is subjected by the material being processed causes the core to move forward of an extent exactly corresponding to the expansion growth undergone by the jacket.

As an alternative to the embodiment described above, the outer jacket may be comprised of two concentric members of different materials and thicknesses, the outer and thicker one being the high resistance steel support jacket proper, while the intermediate one having a lower thickness, between the core and the jacket, is made of a relatively soft material but having a relatively high thermal expansion coefficient, such as bronze. This intermediate element is provided to more readily compensate the lower thermal expansion of the wear resistant core making it possible therefore to operate at particularly high temperatures, or to use wear resistant cylinders having a small diameter and correspondingly small thickness.

The attached figures, wherein 1 indicates the support jacket and 2 the wear resistant core, show schematically in cross section the different situations of the two components of the wear resistant cylinder according to this invention.

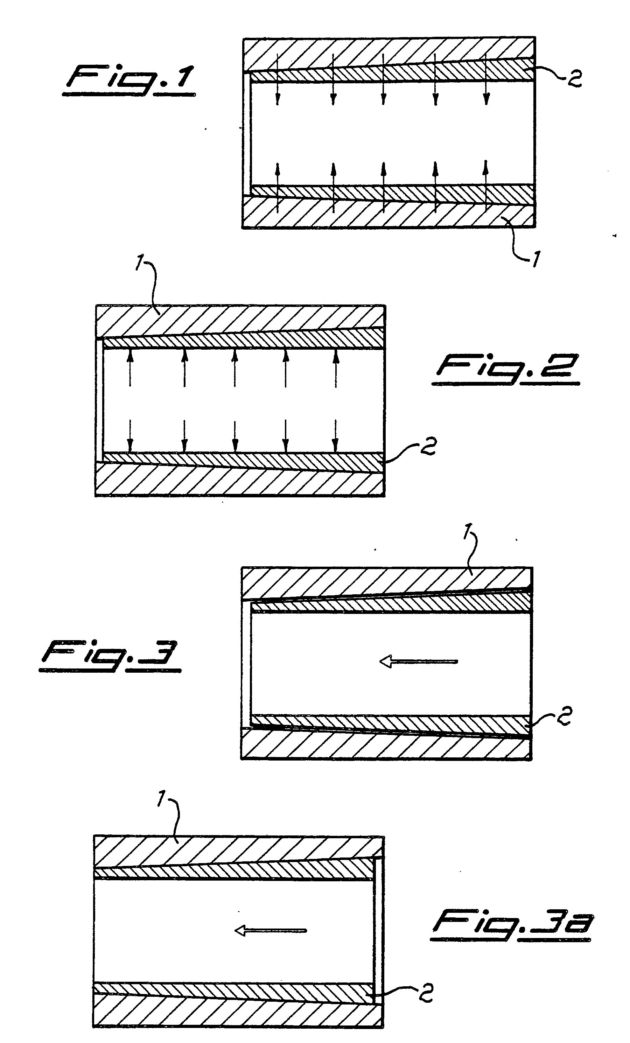

Figure 1 shows the compressive stresses, indicated by the arrows, to which the inner core is subjected due to the shrinking of the jacket after the shrink-fitting operation.

Figure 2 instead shows the outward directed pressure stresses, indicated by the arrows, to which the core inner surface is subjected by the material being processed at the operating temperature and pressure.

Figures 3 and 3a show the sequence of adjusting steps of the two members according to this invention, at temperatures higher than the rated operating temperatures.

Although this invention has been shown and described based on a particular embodiment thereof, it will be apparent to those skilled in this art that variations and/or modifications may be made without exceeding the scope of protection of said invention. Thus, for the inner core it will also be possible to use ceramic materials, diamond based agglomerates, metal carbides, and so on, while the contact surfaces between jacket and core may also be perfectly cylindrical.

## Claims

1. A wear preventing cylinder for injection molding or extrusion machines, characterized in that it includes at least a single outer metal support jacket and a hollow inner core of a wear resistant material.

2. The wear preventing cylinder of Claim 1, characterized in that said at least single outer support jacket is made of a high resistance steel and said wear resistant inner core is made of a high hardness sintered powder or agglomerate.

3. The wear preventing cylinder of Claim 2, characterized in that said at least single outer jacket (1) and said inner core (2) are shrink-fitted together by simply fitting the latter (2) inside the outer jacket (1).

4. The wear preventing cylinder of Claim 3, characterized in that the inner surface of said at least single outer jacket (1) and the outer surface of said inner jacket (2) have a complementary frustoconical shape.

5. The wear preventing cylinder of Claim 4, characterized in that the smaller diameter end of the frustoconical inner surface of said at least single outer jacket (1) and of the frustoconical outer surface of inner core (2) faces the forwarding direction of the plastic material being processed.

6. A wear preventing cylinder according to any one of the previous Claims, characterized in that said outer jacket comprises two concentrical members wherein the outer one is thicker and is made of a high resistance steel while the intermediate one is made of a high thermal expansion coefficient material.

7. The wear resistant cylinder of Claim 6, characterized in that said smaller thickness intermediate member is made of bronze.

_Fig.1_

_Fig.2_

_Fig.3_

_Fig.3a_